Europäisches Patentamt

European Patent Office

Office européen des brevets

(19)

(11) Veröffentlichungsnummer: **0 193 794**
**B1**

(12)

# EUROPÄISCHE PATENTSCHRIFT

(45) Veröffentlichungstag der Patentschrift:
18.01.89

(51) Int. Cl.⁴: **H 02 K 5/00**, H 02 K 7/10

(21) Anmeldenummer: 86102128.5

(22) Anmeldetag: 19.02.86

(54) **Befestigungsanordnung für Kleinmotoren.**

(30) Priorität: 08.03.85 DE 3508249

(43) Veröffentlichungstag der Anmeldung:
10.09.86 Patentblatt 86/37

(45) Bekanntmachung des Hinweises auf die Patenterteilung:
18.01.89 Patentblatt 89/3

(84) Benannte Vertragsstaaten:
DE FR GB IT SE

(56) Entgegenhaltungen:
DE-B- 1 067 114
DE-C- 915 874
DE-U- 1 927 283
DE-U- 7 424 688
GB-A- 2 014 371

(73) Patentinhaber: Süddeutsche Kühlerfabrik Julius Fr. Behr GmbH & Co. KG, Mauserstrasse 3,
D-7000 Stuttgart 30 (DE)
Patentinhaber: BAYERISCHE MOTOREN WERKE Aktiengesellschaft, Postfach 40 02 40 Petueiring 130 - AJ-36, D-8000 München 40 (DE)

(72) Erfinder: Matzeit, Günter, Lindenstrasse 64,
D-7146 Tamm (DE)
Erfinder: Andersen, Jürgen, Uranusstrasse 3,
D-8031 Gilching (DE)
Erfinder: Dietzsch, Kurt, Dipl.-Ing. (FH), Göppinger Strasse 65, D-7250 Leonberg-Eltingen (DE)

(74) Vertreter: Wilhelm, Hans-Herbert, Dr.-Ing. et al, Wilhelm & Dauster Patentanwälte Hospitalstrasse 8,
D-7000 Stuttgart 1 (DE)

**Beschreibung**

Die Erfindung betrifft eine Befestigungsanordnung für Kleinmotoren, insbesondere für elektrische Stell- oder Schrittschaltmotoren für Stellantriebe von Kraftfahrzeug-Zusatzeinrichtungen, bestehend aus einer ortsfest angeordneten Halterung, mindestens einem an dieser anbringbaren Motor- oder Getriebegehäuse und aus einer Kupplungsanordnung zur Übertragung der Drehbewegung der Abtriebswelle des Motors auf ein Stellglied.

Insbesondere im Kraftfahrzeugbau wird die Anordnung relativ kleiner Verstellmotoren an verschiedenen Stellen des Fahrzeuges notwendig, beispielsweise im Bereich von Heizungs- oder Klimatisierungseinrichtungen, wo Klappen oder Ventile gesteuert werden müssen, aber auch bei anderen Einsatzfällen, bei denen eine elektrische Steuerung oder Regelung über solche Verstellmotoren eingesetzt wird. Die bisher vorgesehene Befestigungsart für solche Verstellmotoren ist ausschliesslich die Verschraubung. Die Motoren werden mit Hilfe von Befestigungsschrauben in dafür vorgesehene Halterungen eingesetzt. Nachteilig ist, dass die herstellungsbedingten Toleranzen für die Schraublöcher keine genaue Positionierung der Verstellmotoren zulassen. Hieraus ergeben sich Schwierigkeiten bei der Anlenkung von nachgeschalteten Stellgliedern. Diese Montageschwierigkeiten führen zu einem grossen Montageaufwand, sowohl bei der Neuanfertigung von Fahrzeugen als auch insbesondere bei einer notwendigen Reparatur der Stellantriebe oder von Teilen davon.

Die Aufgabe der Erfindung ist es daher, eine Befestigungsanordnung der eingangs genannten Art zu schaffen, bei der ein passgerechter Sitz der Verstellmotoren bei möglichst geringem Montage- und Herstellungsaufwand gewährleistet ist.

Zur Lösung dieser Aufgabe wird bei einer Befestigungsanordnung der eingangs genannten Art vorgesehen, dass das Gehäuse an einer Seite mit einem mit der Halterung eine Art Schwenklagerung für das Motorgehäuse bildenden Ansatz od. dgl. versehen ist, und auf einer versetzt dazu liegenden Seite eine mit der Halterung zusammenwirkende Rastverbindung bildet, dass am Motorgehäuse und an der Halterung formschlüssig ineinandergreifende Passführungen vorgesehen sind, und dass die Kupplungsanordnung aus zwei beim Einschwenken des Gehäuses in die Halterung ineinander steckbaren Kupplungshälften besteht, deren formschlüssig aneinanderlegbare Kraftübertragungsflächen in Ebenen angeordnet sind, die parallel zur Drehachse der Abtriebswelle verlaufen und bei einer Schwenkbewegung in Ebenen senkrecht zur Achse der Schwenklagerung bewegt werden. Durch diese Ausgestaltung entfällt für den Einbau – und auch für den Ausbau – des Verstellmotors und zur Kupplung mit dem Stellglied ein aufwendiger Schraubvorgang. Auch im Reparaturfall ist ein schnelles müheloses Auswechseln des Motors möglich, dessen Einbaulage trotz der gewählten Rastbefestigung durch die Passstifte exakt bestimmt ist. Die Ausbildung der Kupplung erlaubt das Zusammenstecken der beiden Kupplungshälften beim Einschwenken des Motors in seine Halterung.

Auch zum Ankuppeln des Motors an das Stellglied sind daher keine aufwendigen Montagearbeiten notwendig.

Es ist bei der neuen Ausführung sehr vorteilhaft, wenn die Rastverbindung auf der der Schwenklagerung gegenüberliegenden Seite des Motorgehäuses angeordnet wird, weil dadurch die an den Befestigungsstellen auftretenden, durch die Kraftübertragung zwischen Motor und Stellglied bewirkten axial und quer verlaufenden Kräfte nur jeweils über verhältnismässig grosse Hebelarme wirken können. Die Kräfte lassen sich daher gut auffangen. Die Rastverbindung kann aus Rasthaken, gegebenenfalls mit einer Greiflasche und aus diesem zugeordneten Rastflächen bestehen. Die Passführungen werden zweckmässig von zwei dem Motorgehäuse oder der Halterung zugeordneten Passstiften mit einer konischen Spitze und aus dem jeweiligen anderen Teil zugeordneten Passbohrungen hergestellt. Die zwei Passstifte sichern eindeutig die Einbaulage des Motors.

Für die Ausbildung der schwenkachsenartigen Lagerung an einem Ende des Motorgehäuses ergeben sich verschiedene Möglichkeiten. So kann der Ansatz als ein am Motorgehäuse angebrachter Nocken ausgebildet werden, der hinter eine Anlagekante eines mit der Halterung fest verbundenen Bügels greift oder umgekehrt. Dabei ist jeweils darauf zu achten, dass Ansatz und/oder Bügel jeweils so ausgebildet sind, dass die für den Einbau des Motors erforderliche Schwenkbewegung nicht behindert wird. Die dafür zweckmässigen Merkmale ergeben sich aus den Unteransprüchen 6 bis 10.

Die Kupplung lässt sich in besonders vorteilhafter Weise dadurch ausbilden, dass eine Kupplungshälfte aus einem auf die Abtriebswelle des Motors aufgesetzten Flügel mit symmetrisch zur Drehachse angeordneten Seitenflächen besteht, der in einen ihm angepassten Schlitz an der anderen Kupplungshälfte eingreift. Um bei einer solchen Ausführungsform möglichst grosse Flächenanteile zu erreichen, die für die Übertragung der Drehbewegung zur Verfügung stehen, ohne jedoch der Einschwenkbewegung für die Montage des Motors im Wege zu stehen, können die quer zur Drehachse verlaufenden Stirnfläche von Flügel und Schlitz jeweils kreisbogenförmig ausgebildet werden, und zwar so, dass sie in etwa an die Schwenkbewegung angepasst sind. Der Flügel erhält daher eine konkave Stirnfläche und der Schlitz eine konvexe Innenfläche.

Zur Begrenzung des Schwenkbereiches des Stellgliedes, beispielsweise zur Begrenzung des Schwenkbereiches einer Klappe oder einer Welle, kann der Flügel mit einem Anschlagzapfen versehen sein, der gegen eine an der Halterung angespritzte Anschlagrippe od. dgl. läuft. Schliesslich kann auch noch die mit dem Schlitz versehene und mit dem Stellglied verbundene Kupplungshälfte ohne einen Schraubvorgang montierbar ausgebildet werden, dadurch, dass sie drehbar an einem Lagersteg der Halterung in einer kreisrunden Öffnung mit radial nachgiebigen Rastarmen eingeklipst ist, wobei die Öffnung eine Achse aufweist, die mit der Achse der Abtriebswelle des Motors fluchtet.

Die Erfindung ist anhand von zwei Ausführungsbeispielen in der Zeichnung dargestellt und wird im nachfolgenden erläutert. Es zeigen:

Fig. 1 eine schematische Darstellung einer Ansicht einer erfindungsgemässen Befestigungsanordnung mit einer Halterung in der ein Stellmotor eingerastet ist,

Fig. 2 den Schnitt durch die Halterung der Fig. 1 in Richtung der Schnittebene II-II wobei der Stellmotor selbst nicht geschnitten ist,

Fig. 3 den Schnitt durch die Halterung der Fig. 1 in Richtung der Schnittlinie III-III – bei nicht geschnittenem Motor –,

Fig. 4 den Schnitt ähnlich Fig. 2 durch eine neue Befestigungsanordnung in einer anderen Ausführungsform und

Fig. 5 schliesslich die Teilansicht der Anordnung der Fig. 4 in Richtung des Pfeiles V gesehen.

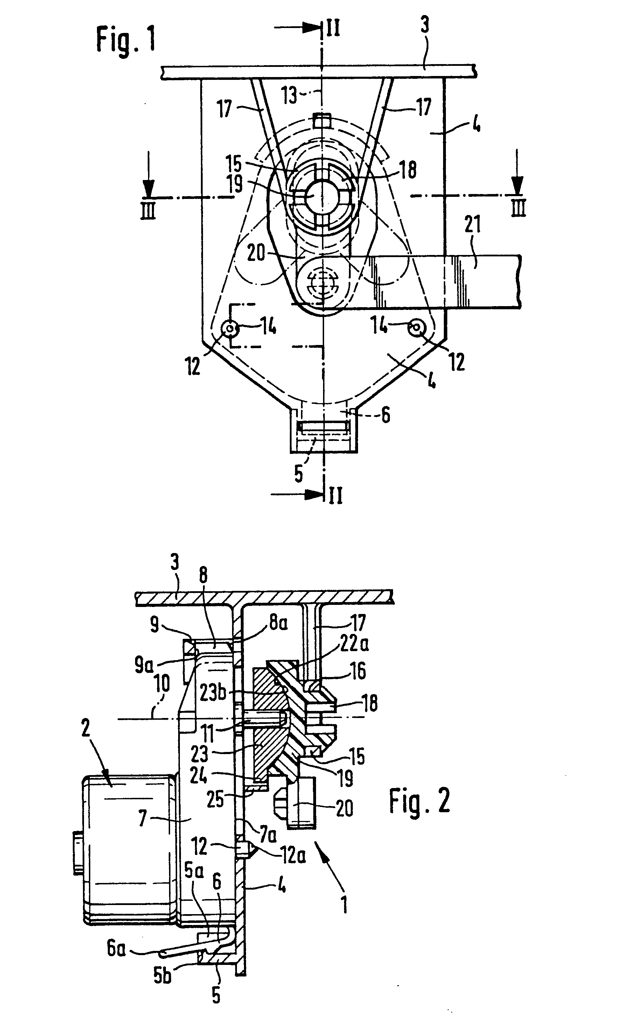

In den Fig. 1 und 2 ist eine Halterung 1 für einen elektrischen Verstellmotor 2 gezeigt, die in nicht näher dargestellter Weise in einem Kraftfahrzeug eingesetzt, beispielsweise eingeschraubt oder eingeschweisst wird. Ihre Anordnung kann daher als ortsfest bezeichnet werden. Die Halterung 1 besteht beim Ausführungsbeispiel der Fig. 1 bis 3 aus einer mit einem Befestigungsflansch 3 ausgerüsteten Platte 4 mit etwa rechteckiger und sich nach unten zu der vom Flansch 3 abgewandten Seite hin verjüngenden Form. Die Platte 4 ist an ihrem unteren Ende mit einem zum Stellmotor 2 hin gerichteten stegartigen Ansatz 5 versehen, der mit zwei seitlich hochstehenden und parallel zueinander verlaufenden Wänden 5a und mit einer an seinem freien Ende hochragenden Anschlagkante 5b versehen ist. Der Steg 5 und die beiden seitlichen Wände 5a bilden daher eine Art Führung für einen elastischen Rasthaken 6, der fest mit dem Gehäuse 7 für den Motor 2 bzw. für das mit diesem verbundene Getriebe verbunden ist. Der Rasthaken 6 greift in der dargestellten Lage hinter die Kante 5b. Er ist mit einer Greiflasche 6a versehen, die es bei Bedarf erlaubt, den Rasthaken 6 aus der Raststellung zu bewegen und so den Stellmotor 2 aus der Befestigungslage zu lösen.

Das Gehäuse 7 ist an dem von dem Rasthaken 6 abgewandten Ende mit einem Nocken 8 in der Form einer länglichen Rippe versehen der mit seiner linken Stirnfläche hinter eine Anlegekante 9a eines Bügels 9 greift, der fest mit der Platte 4 verbunden ist. Der Nocken 8 weist auf der der Platte 4 zugewandten Seite eine vom Gehäuse 7 nach aussen abgeschrägte Stirnfläche 8a auf. Seine entgegengesetzte Stirnfläche ist ebenso wie die innere Anlagefläche des Bügels 9 eben. Diese Stirnfläche verläuft senkrecht zu der Achse 10 der Abtriebswelle 11 des Stellmotors 2. Das Gehäuse 7 liegt mit einer ebenfalls senkrecht zur Achse 10 verlaufenden Seitenfläche 7a an der ihr zugewandten Fläche der Platte 4 an.

Zur Lagenfixierung des Gehäuses 7 und des Stellmotors 2 an der Platte 4 sind an dem Gehäuse 7 zwei Passstifte 12 mit einer konischen Spitze 12a vorgesehen, deren Achse parallel zur Achse 10 der Antriebswelle 11 verläuft und die symmetrisch zu der Mittelebene 13 der Platte 4 angeordnet sind. Diese Passstifte 12 greifen formschlüssig in zwei entsprechende Öffnungen 14 der Platte 4 ein. Sie sichern die exakte Einbaulage des Stellmotors 2.

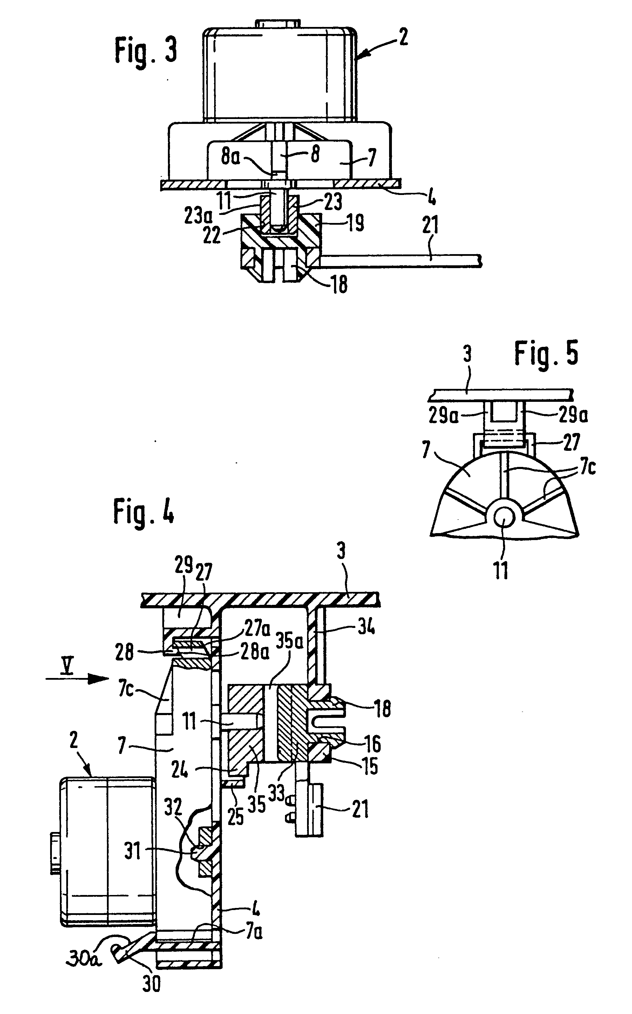

Parallel zur Plaatte 4 ist ein Lager 15 mit einer kreisrunden Öffnung 16 vorgesehen, das von zwei schräg verlaufenden und mit dem Flansch 3 verbundenen Stegen 17 gehalten ist. In die kreisrunde Öffnung 16 des Lagers 15 sind vier radial nachgiebige Rastarme 18 einer Kupplungshälfte 19 eingeklipst, die, wie insbesondere Fig. 3 zu entnehmen ist, aus einem länglichen Kunststoffteil mit einem daran angespritzten Arm 20 zum Einhängen des Stellgliedes 21 besteht, das hier eine Verstellstange ist. Die Kupplungshälfte 19 ist mit einem durch ihre Mittelachse (die in der gewählten Darstellung der Achse 10 der Abtriebswelle 11 entspricht) verlaufenden Schlitz 22 versehen, der auf der den Rastarmen 18 zugewandten Seite mit einer kreisbogenförmig verlaufenden Stirnfläche 22a versehen ist. In diesen Schlitz 22 greift ein Flügel 23 ein, der parallele Seitenflächen 23a aufweist, die mit ebensolchen parallelen Seitenflächen des Schlitzes 22 in Eingriff stehen. Dieser Flügel 23 ist auf die Abtriebswelle 11 aufgepresst und ist an seiner Unterseite mit einem Anschlagstift 24 od. dgl. versehen, der die Schwenkbewegung des Flügels 23 und der Abtriebswelle 11 dadurch begrenzt, dass er bei einem zu grossen Ausschlag an eine fest an der Platte 4 angespritzte Rippe 25 od. dgl. anschlägt. Der Flügel 23 weist ausserdem eine ebenfals kreisbogenförmig gewölbte, und zwar nach aussen gewölbte Stirnfläche 23b auf, die weitgehend an die nach innen gewölbte Stirnfläche 22a der Kupplungshälfte 18 angepasst ist. Die Kupplungshälften 23 und 19 liegen daher formschlüssig ineinander. Die Klipsverbindung der Arme 18 in der Öffnung 16 ist so gewählt, dass die Kupplungshälfte 19 sich leicht drehen kann. Die Drehbewegung des Stellmotors 2 wird daher über die Kupplung an das Stellglied 21 übertragen.

Der in der dargestellten Lage eingebaute Stellmotor lässt sich in einfacher Weise dadurch ausbauen, dass die Grifflasche 6a nach innen zum Motor 2 gedrückt wird. Dadurch lässt sich der untere Teil des Gehäuses 7 von der Platte 4 lösen. Die Passstifte 12 treten aus ihren zugeordneten Öffnungen 14 heraus, wobei der gesamte Motor 2 mit Getriebegehäuse 7 eine Schwenkbewegung im wesentlichen um eine Schwenkachse ausführt, die an der Anlagekante 9a liegt. Der Radius der gewölbten Stirnflächen 23a und 22a der Kupplungshälften 23 bzw. 19 ist so gewählt, dass diese Schwenkbewegung durch die ineinandergreifenden Kupplungsteile nicht behindert wird. Durch die neue Ausgestaltung lässt sich daher der Stellmotor 2, beispielsweise bei einem Defekt, leicht auswechseln. Schwierige Schraubarbeiten an unzugänglichen Stellen sind nicht nötig. Der Einbau eines neuen Motors erfolgt in umgekehrter Weise. Auch hierzu sind keine Schraubarbeiten und auch keine schwierigen Einpassarbeiten nötig. Es genügt, den Nocken 8 in dem Bügel 9 zu zentrieren, und dann den Rasthaken 6 zwischen die Führungswände 5a zu bringen. Die Passstifte 12 suchen sich dann ihre zugeordneten Passöffnungen 14 aufgrund der konischen Spitze 12a selbst. Auch die Kupplungshälften lassen sich ohne Schwierigkeiten ineinanderschieben, ohne dass hierfür gesonderte Montagevorgänge notwendig sind. Das kann beispielsweise dadurch geschehen, dass die Kuppunlgshälfte 19 durch Bewegen des Hebels 21 von Hand etwas gedreht wird, bis der Flügel 23 in den Schlitz 22 der Kupplungshälfte 19 eingreift.

In der Fig. 4 ist ein abgewandeltes Ausführungsbeispiel insofern gezeigt, als hier die Rastbefestigung des Stellmotors 2 in einer Art kinematischer Umkehrung erfolgt. Hier ist das Gehäuse 7 mit einem Bügel 27 versehen, der von innen über einen Haken 28 mit einer abgeschrägten Vorderkante 28a greift. Der Haken 28 kann Teil eines fest mit dem Flansch 3 verbundenen Teiles 29 sein, das aus Festigkeitsgründen mit zwei parallel zueinander verlaufenden Seitenwänden 29a versehen ist. Bei dieser Ausführungsform ist die Platte 4 an ihrem unteren Ende mit dem elastischen Rasthaken 30 versehen, der mit einer Auflaufschräge 30a für die Unterkante 7a des Gehäuses 7 versehen ist. Die Abmessungen sind natürlich so gewählt, dass das Gehäuse 7 nach dem Einschwenken sicher an der Platte 4 gehalten ist. Die Platte 4 und die mit ihr verbundenen Teile können beispielsweise aus Kunststoff bestehen. Bei dem gezeigten Ausführungsbeispiel ist auch die Platte 4 mit Passstiften 31 und das Gehäuse 7 mit den zugeordneten Passöffnungen 32 versehen. Das Gehäuse 7 weist in seinem oberen Bereich Versteifungsrippen 7c auf.

Bei dieser Ausführungsform ist das Lager 15 für die Kupplungshälfte 33 an einer plattenförmigen Aufhängung 34 angeordnet, die mit dem Flansch 3 verbunden ist. Die Kupplungshälfte 33 weist hier wiederum einen Schlitz, ähnlich der Ausführung der Fig. 1 bis 3 auf, in die die Kupplungsflächen eines Flügels 35 eingreifen, der ebenfalls auf der Abtriebswelle 11 aufgepresst ist, aber nicht mit einer kreisbogenförmig gewölbten Stirnfläche, wie beim Ausführungsbeispiel der Fig. 2, ausgestattet ist. Die Ausführung der Fig. 4 sieht vielmehr vor, dass zwischen den Stirnflächen des Passstückes 35a der einen Kupplungshälfte 35 und dem zugeordneten Schlitz der anderen Kupplungshälfte 33 genügend Spiel vorhanden ist, um die zum Ein- und Ausbau des Stellmotors 2 erforderliche Schwenkbewegung durchführen zu können. Der Ein- und Ausbauvorgang ist im übrigen der gleiche, wie anhand der Fig. 1 bis 3 erläutert.

## Patentansprüche

1. Befestigungsanordnung für Kleinmotoren, insbesondere für elektrische Stell- oder Schrittschaltmotoren für Stellantriebe von Kraftfahrzeug-Zusatzeinrichtungen, bestehend aus einer ortsfest angeordneten Halterung (4), mindestens einem an dieser anbringbaren Motor- oder Getriebegehäuse (7) und aus einer Kupplungsanordnung zur Übertragung der Drehbewegung der Abtriebswelle (11) des Motors (2) auf ein Stellglied (21), dadurch gekennzeichnet, dass das Motor- oder Getriebegehäuse (7) an einer Seite mit einem mit der Halterung (4) eine Art Schwenklagerung bildenden Ansatz (8, 27) od. dgl. versehen ist, und auf einer versetzt dazu liegenden Seite eine mit der Halterung zusammenwirkende Rastverbindung (5, 6 bzw. 7a, 30) bildet, dass am Motor- oder Getriebegehäuse (7) und an der Halterung (4) formschlüssig ineinandergreifende Passführungen (12, 14 bzw. 31, 32) vorgesehen sind, und dass die Kupplungsanordnung aus zwei beim Einschwenken des Gehäuses in die Halterung ineinander steckbaren Kupplungshälften (19, 32 bzw. 33, 35) besteht, deren formschlüssig aneinanderlegbare Kraftübertragungsflächen (22, 35a) in Ebenen angeordnet sind, die parallel zur Drehachse (10) der Abtriebswelle (11) verlaufen und bei einer Schwenkbewegung in Ebenen senkrecht zur Achse (9a, 28a) der Schwenklagerung bewegt werden.

2. Befestigungsanordnung nach Anspruch 1, dadurch gekennzeichnet, dass die Rastverbindung auf der der Schwenklagerung (9a, 28a) gegenüberliegenden Seite des Motor- Getriebegehäuses (7) angeordnet ist.

3. Befestigungsanordnung nach Anspruch 2, dadurch gekennzeichnet, dass die Rastverbindung aus einem der Halterung (4) oder dem Motor- Getriebegehäuse (7) zugeordneten elastischen Rasthaken (6, 30) und einer dem jeweilig anderen Teil zugeordneten Rastfläche (5a, 7a) besteht.

4. Befestigungsanordnung nach Anspruch 3, dadurch gekennzeichnet, dass der Rasthaken (6) mit einer Greiflasche (6a) ausgerüstet ist.

5. Befestigungsanordnung nach Anspruch 3, dadurch gekennzeichnet, dass der Rasthaken (30) mit einer Auflaufschräge (30a) versehen ist.

6. Befestigungsanordnung nach Anspruch 1, dadurch gekennzeichnet, dass die Passführungen von zwei dem Motor- Getriebegehäuse (7) oder der Halterung (4) zugeordneten Passstiften (12, 31) mit einer konischen Spitze und aus dem jeweiligen anderen Teil zugeordneten Passbohrungen (14, 32) bestehen.

7. Befestigungsanordnung nach einem der Ansprüche 1 bis 6, dadurch gekennzeichnet, dass der Ansatz als ein am Motor- Getriebegehäuse (7) angebrachter Nocken (8) ausgebildet ist, der hinter eine Anlagekante (9a) eines mit der Halterung (4) fest verbundenen Bügels (9) greift.

8. Befestigungsanordnung nach Anspruch 7, dadurch gekennzeichnet, dass die Halterung eine senkrecht zur Achse (10) der Abtriebswelle (11) des Motors verlaufende Platte (4) mit Durchbrechungen aufweist und dass der Nocken (8) als eine längliche Rippe ausgebildet ist, deren quer zur Anlagekante (9a) verlaufende Länge dem Abstand der Anlagekante (9a) von der Platte (4) entspricht, wobei ihre der Platte (4) zugewandte Stirnkante (8a) vom Motor-Getriebegehäuse (7) weg nach aussen abgeschrägt ist.

9. Befestigungsanordnung nach einem der Ansprüche 1 bis 6, dadurch gekennzeichnet, dass der Ansatz als ein am Motor- Getriebegehäuse (7) angebrachter Bügel (29) ausgebildet ist, der mit einer Stirnseite eine Kante (28a) eines fest mit der Halterung verbundenen Hakens (29) umgreift.

10. Befestigungsanordnung nach Anspruch 9, dadurch gekennzeichnet, dass die Anlagekante (28a) des Hakenteiles (28) die freie Kante eines vom Motor- Getriebegehäuse (7) weg abgeschrägten Randes eines Steges (29) der Halterung (1) ist.

11. Befestigungsanordnung nach den Ansprüchen 9 und 10, dadurch gekennzeichnet, dass die Halterung (1) eine senkrecht zur Achse (10) der Abtriebswelle (11) verlaufende Platte (4) aufweist und dass der Einhängebügel (27) in seiner quer zur Anlagekante (28a) verlaufenden Länge dem Abstand des Steges (29) von der Platte (4) angepasst ist und an seiner der Platte (4) zugewandten Stirnseite (27a) vom Motor- Getriebegehäuse (7) weg nach aussen abgeschrägt ist.

12. Befestigungsanordnung nach einem der Ansprüche 1 bis 11, dadurch gekennzeichnet, dass eine Kupplungshälfte (23, 35) aus einem auf die Abtriebswelle (11) des Motors aufgesetzten Flügel mit symmetrisch zur Achse (10) angeordneten Seitenflächen besteht, der in einen ihm angepassten Schlitz (22) an der anderen Kupplungshälfte eingreift.

13. Befestigungsanordnung nach Anspruch 12, dadurch gekennzeichnet, dass die quer zur Achse (10) verlaufenden Stirnflächen des Flügels (23, 35) und des Schlitzes (22) kreisbogenförmig ausgebildet sind.

14. Befestigungsanordnung nach Anspruch 12, dadurch gekennzeichnet, dass der Flügel (23, 35) mit einem Anschlagstift (24) versehen ist, der mit einer Anschlagrippe (25) an der Platte (4) zusammenwirkt.

15. Befestigungsanordnung nach Anspruch 12, dadurch gekennzeichnet, dass die mit dem Schlitz (22) versehene und mit dem Stellglied (21) verbundene Kupplungshälfte (19, 33) drehbar an einem von Stegen (17, 34) od. dgl. gehaltenen Lager (15) der Halterung (1) angeordnet ist.

16. Befestigungsanordnung nach Anspruch 15, dadurch gekennzeichnet, dass das Lager (15) eine kreisrunde Öffnung (16) mit einer Achse aufweist, die mit der Achse (10) der Abtriebswelle (11) fluchtet, und dass die Kupplungshälfte (19, 33) mit radial nachgiebigen Rastarmen (18) in diese Öffnung eingeklipst ist.

## Claims

1. Fixing device for small motors, particularly for electric servomotors or stepping motors for actuators of motor vehicle auxiliary devices, consisting in a stationarily mounted holding device (4), at least one motor or gearbox casing (7) mountable thereon, and in a coupling arrangement for the transmission of the rotary movement of the output shaft (11) of the motor (2) to a servo component (21), characterized in that the motor or gearbox casing (7) is provided on one side with a projection (8, 27) or the like constituting with the holding device (4) a kind of pivoted mounting, and forms on a side offset relative thereto a connection (5, 6 and 7a, 30) cooperating with the holding device, in that positively-locking, mutually engaging and snugly fitting guideways (12, 14 and 31, 32) are provided on the motor or gearbox casing (7) and on the holding device (4), and in that the coupling arrangement consists of two coupling halves (19, 32 and 33, 35) able to be inserted one into the other on swivelling the casing into the holding device, the positively mutually applicable force transmission surfaces (22, 35a) of said coupling halves being-arranged along planes which extend parallel with the axis of rotation (10) of the output shaft (11), and, on a swivelling movement, being moved along planes perpendicalurly to the axis (9a, 28a) of the pivoted mounting.

2. Fixing device according to claim 1, characterized in that the lock-in connection is provided on the side of the motor/gearbox casing (7) situated opposite the pivoted mounting (9a, 28a).

3. Fixing device according to claim 2, characterized in that the lock-in connection consists of an elastic locking hook (6, 30) associated with the holding device (4) or the motor/gearbox casing (7) and of a locking surface (5b, 7a) associated with the respective other part.

4. Fixing device according to claim 3, characterized in that the locking hook (6) is fitted with a gripping bracket (6a).

5. Fixing device according to claim 3, characterized in that the the locking hook (30) is provided with a leading ramp (30a).

6. Fixing device according to claim 1, characterized in that the guideways consist of two dowel pins (12, 31) associated with the motor/gearbox casing (7) or the holding device (4) with a conical tip, and of fitting holes (14, 32) associated with the respective other part.

7. Fixing device according to one of claims 1 to 6, characterized in that the projection is designed as a cam (8) fitted on the motor/gearbox casing, engaging behind a guide edge (9a) of a strap (9) rigidly connected with the holding device (4).

8. Fixing device according to claim 7, characterized in that the holding device has a plate (4) with interruptions, extending perpendicularly to the axis (10) of the output shaft (11) of the motor, and in that the cam (8) is designed as a longitudinal rib, the length of which extending transversally to the guide edge (9a) corresponds to the distance from the guide edge (9a) from the plate (4), the front face (8a) facing the plate (4) being slanted outwards away from the motor/gearbox housing (7).

9. Fixing device according to one of claims 1 to 6, characterized in that the projection is contructed as a strap (29) mounted on the motor/gearbox casing (7) which, by a front side, grips an edge (28a) of a hook (29) rigidly connected with the holding device.

10. Fixing device according to claim 9, characterized in that the guide edge (28a) of the hook part (28) is the free edge of a border of a web (29) of the holding device (1) bevelled away from the motor/gearbox housing (7).

11. Fixing device according to claims 9 and 10, characterized in that the holding device (1) has a plate (4) extending perpendicularly to the axis (10) of the output shaft (11) and in that the suspension strap (27) along its length extending transversally to the guide edge (28a) is matched to the distance of the web (29) from the plate (4) and is bevelled at its front face (27a) facing the plate (4) away and outwards from the motor/gearbox housing (7).

12. Fixing device according to one of claims 1 to 11, characterized in that one coupling half (23, 35) consists of a wing mounted on the output shaft (11) of the engine with lateral surfaces disposed symmetrically to the axis (10) which engages into a matching slot (22) on the other coupling half.

13. Fixing device according to claim 12, characterized in that the front faces of the wing (23, 35) and of the slot (22) which extend transversally to the axis (10) are designed to be arc-shaped.

14. Fixing device according to claim 12, characterized in that the wing (23, 35) is provided with a stop pin (24) which cooperates with a stop rib (25) on the plate (4).

15. Fixing device according to claim 12, characterized in that the coupling half (19, 33) provided with the slot (22) and connected with the servo component (21) is rotatably mounted on a bearing (15) of the holding device (1) held by webs (17, 34) or the like.

16. Fixing device according to claim 15, characterized in that the bearing (15) has a circular opening (16) with an axis which extends in line with the axis (10) of the output shaft, and in that the coupling half (19, 33) is clipped into this opening with radially flexible engagement arms (18).

## Revendications

1. Dispositif de fixation pour des petits moteurs, notamment pour des servomoteurs ou des moteurs pas-à-pas électriques utilisés pour des dispositifs de servocommande de dispositifs auxiliaires de véhicules automobiles, constitué par un support (4) monté fixe, au moins un carter (7) pour le moteur ou la transmission, pouvant être monté sur ce support, et un dispositif d'accouplement pour la transmission du mouvement de rotation de l'arbre mené (11) du moteur (2) à un organe de réglage (21), caractérisé par le fait que le carter (7) pour le moteur ou la transmission comporte, d'un côté, un appendice saillant (8, 26) ou analogue formant, avec le support (4), une sortie de support pivotant, et forme, sur un côté décalé par rapport au précédent, un dispositif de liaison à encliquetage (5, 6 ou 7a, 30) coopérant avec le support, qu'il est prévu, sur le carter (7) pour le moteur ou la transmission et sur le support (2), des guides d'ajustement (12, 14 ou 31, 32) s'engageant l'un dans l'autre selon une liaison par formes complémentaires, et que le dispositif d'accouplement est constitué par deux moitiés d'accouplement (19, 32 ou 33, 35), qui peuvent être enfichées l'une dans l'autre lors de l'introduction par pivotement du carter dans le support, et dont les surfaces de transmission de force (22, 35a), qui peuvent s'appliquer l'une contre l'autre par formes complémentaires, sont disposées dans des plans parallèles à l'axe de rotation (10) de l'arbre mené (11), et se déplacent, lors d'un mouvement de pivotement, dans des plans perpendiculaires à l'axe (9a, 28a) du support pivotant.

2. Dispositif de fixation selon la revendication 1, caractérisé en ce que le dispositif de liaison à encliquetage est disposé sur le côté du carter (7) pour le moteur ou la transmission, situé à l'opposé du support pivotant (9a, 28a).

3. Dispositif de fixation selon la revendication 2, caractérisé en ce que le dispositif de liaison à encliquetage est constitué par un crochet d'encliquetage élastique (6, 30) associé au support (4) ou au carter (7) pour le moteur ou la transmission et par une surface d'encliquetage (5b, 7a) associée à l'autre partie respective.

4. Dispositif de fixation selon la revendication 3, caractérisé en ce que le crochet d'encliquetage (6) est équipé d'une patte d'accrochage (6a).

5. Dispositif de fixation selon la revendication 3, caractérisé en ce que le crochet d'encliquetage (30) comporte une rampe de montée (30a).

6. Dispositif de fixation selon la revendication 1, caractérisé en ce que les guides d'ajustement sont constitués par deux broches d'ajustement (12, 31) associées au carter (7) pour le moteur ou la transmission ou au support (4) et possédant une pointe conique et par des perçages d'ajustement (14, 32) associés respectivement à l'autre partie.

7. Dispositif de fixation selon l'une des revendications 1 à 6, caractérisé en ce que l'appendice saillant est réalisé sous la forme d'une came (8) rapportée sur le carter (7) pour le moteur ou la transmission et s'engageant derrière une arête de montage (9a) d'un étrier (9) relié rigidement au support (4).

8. Dispositif de fixation suivant la revendication 7, caractérisé par le fait que le support comporte une plaque (4) munie de perçages et disposée perpendiculairement à l'axe (10) de l'arbre mené (11), et que la came (8) est réalisée sous la forme d'une nervure allongée qui s'étend transversalement par rapport à l'arête de montage (9a) et dont la longueur correspond à la distance entre l'arête de montage (9a) et la plaque (4) et dont l'arête frontale (8a) tournée vers la plaque (4) est biseautée vers l'extérieur à partir du carter (7) pour le moteur ou la transmission.

9. Dispositif de fixation selon l'une des revendications 1 à 6, caractérisé en ce que l'appendice saillant est réalisé sous la forme d'un étrier (27) disposé sur le carter (7) pour le moteur ou la transmission et s'engageant, par une face frontale, autour d'une arête (28a) d'un crochet relié rigidement au support.

10. Dispositif de fixation selon la revendication 9, caractérisé en ce que l'arête de bord (28a) de la partie en forme de crochet (28) est l'arête libre d'un bord, qui est biseauté à partir du carter (7) pour le moteur ou la transmission, d'une barrette (29) du support (1).

11. Dispositif de fixation selon les revendications 9 et 10, caractérisé en ce que le support (1) comporte une plaque (4) perpendiculaire à l'axe (10) de l'arbre mené (11) et que la longueur, comptée transversalement par rapport à l'arête de montage (28a), de l'étrier de suspension (27) est adaptée à la distance entre la barrette (29) et la plaque (4) et qu'au niveau de sa face frontale (27a) tournée vers la plaque (4), l'étrier est biseauté vers l'extérieur à partir du carter (7) pour le moteur ou la transmission.

12. Dispositif de fixation suivant l'une des revendications 1 à 11, caractérisé par le fait qu'une moitié d'accouplement (23, 35) est constituée par un flasque, qui est monté sur l'arbre mené (11) du moteur, possède des surfaces latérales symétriques par rapport à l'axe (10) et s'engage dans une fente (22) adaptée pour ce flasque et ménagée dans l'autre moitié d'accouplement.

13. Dispositif de fixation selon la revendication 12, caractérisé en ce que les surfaces frontales, qui s'étendent transversalement par rapport à l'axe (10), du flasque (23, 35) et de la fente (22) sont réalisées avec une forme d'arc de cercle.

14. Dispositif de fixation selon la revendication 12, caractérisé en ce que le flasque (23, 35) comporte une tige de butée (24) qui coopère avec une nervure de butée (25) située sur la plaque (4).

15. Dispositif de fixation selon la revendication 12, caractérisé en ce que la moitié d'accouplement (19, 33) munie de la fente (22) est reliée à l'organe de réglage (21) et est montée, de façon à pouvoir tourner, dans un palier (15) maintenu par des barrettes (17, 34) ou analogues, du support (1).

16. Dispositif de fixation selon la revendication 15, caractérisé en ce que le palier (15) possède une ouverture circulaire (16), dont l'axe est aligné avec l'axe (10) de l'arbre mené (11), et que la moitié d'accouplement (19, 33) est fixée dans cette ouverture par encliquetage au moyen de bras d'encliquetage (18) flexibles radialement.

Fig. 1

Fig. 2

Fig. 3

Fig. 5

Fig. 4